# EUROPEAN PATENT SPECIFICATION

(11) **EP 1 466 826 B1**
(45) Date of publication and mention of the grant of the patent: **02.01.2013**
(21) Application number: 04003682.4
(22) Date of filing: 18.02.2004
(51) Int. Cl.: B63H 5/08, B63H 23/04

(54) **Propulsion unit of marine vessel**
Vortriebseinheit für ein Schiff
Unité de propulsion pour un navire

(30) Priority: 07.04.2003 FI 20030519
(43) Date of publication of application: 13.10.2004
(73) Proprietor: Wärtsilä Finland Oy, 65380 Vaasa (FI)
(72) Inventor: Levander, Oskar, 20810 Turku (FI)
(74) Representative: Brax, Matti Juhani

(56) References cited:
- WO-A1-00/27696
- DE-A1- 2 533 306
- DE-A1- 3 808 710
- JP-A- 6 056 082

## Description

The present invention relates to a propulsion unit of a marine vessel including a rudder device supported to a hull of the marine vessel by a support structure, a first propeller unit provided in front of the rudder device and assembled to a first shaft arrangement, which is in connection with a power unit arranged in the vessel, which first propeller unit includes a first propeller hub, and a second propeller unit arranged behind the first propeller unit and assembled to a second shaft arrangement, which is arranged in connection with the support structure of the rudder device, which second propeller unit includes a second propeller hub, according to the preamble of claim 1.

Propulsion of ship has traditionally been accomplished by using one or several rotating propellers and steering by making use of rudders in connection with a propeller. Contra rotating propellers (CRP) are known to offer some benefits over conventional single propeller. The load is distributed onto the blade area of two propellers instead of one, and the rotational energy of the slip stream of the first propeller may be more efficiently recovered, just to mention a few.

The most common solution of providing a CRP system is making use of two concentric shafts, hollow outer shaft and inner shaft inside the outer shaft. In this kind of solution the first, front propeller is connected to the outer shaft and the second, rear propeller is connected to the inner shaft, which extends through the first propeller hub. US 4,963,108 and DE 3808710 A1 may be regarded as examples of this kind of a solution. This arrangement requires substantially complicated shafting and gear devices. In practice also sealing is prone to be problematic to arrange.

As an alternative, a combination of a traditional shaft driven single propeller and a CRP pod as rear propeller has also been suggested. With this solution it is possible to avoid the complicated shafting and gear devices of conventional CRP system making use of two concentric shafts. However, this solution requires substantially large gap between the propellers, because the pod must be able to turn behind the front propeller. This in turn decreases the efficiency of the solution.

An example of such a solution may be found in JP 06-056082 A1. Another example of such a solution may be found in WO 00/27696 which is considered to represent the closest prior art.

It is an object of the invention to provide a propulsion unit of a marine vessel, which minimises the problems of prior art. It is a specific object of the invention to provide a propulsion unit of a marine vessel, which is additionally capable of steering action.

Above and other objects of the invention are met substantially as is disclosed in the claim 1 and as is more clearly disclosed in the other claims.

In this specification the terms "after", "behind", "rear", "in front of" or alike expressions in connection with describing a location of an element, are to be understood in relation to direction from bow to stern in the vessel.

According to an advantageous embodiment of the invention a propulsion unit of a marine vessel includes a rudder device supported on the hull of the vessel by a support structure, first propeller unit provided in front the rudder device and assembled to first shaft arrangement, which is in connection with a power unit arranged in the vessel, and second propeller unit arranged behind the first propeller unit. It is characteristic to the invention that the second propeller unit is assembled to a second shaft arrangement, which is arranged in connection with the support structure of the rudder device. This way the power transmission to the second propeller unit may be provided through a separate route than within the first shaft arrangement and additionally the propulsion unit is capable of steering action.

The second shaft arrangement is supported within the support structure of the rudder device so the synergy of integration different part is maximised. The support structure of the rudder device includes a torpedo section, which is arranged behind the first and the second propeller units and includes support means for the second propeller unit.

The second shaft arrangement comprises a propeller shaft being substantially parallel to the first shaft arrangement and also a drive shaft being at an angle to the propeller shaft. Additionally the propeller shaft and the drive shaft are connected with each other by an angle transmission or alike provided within the torpedo section. The drive shaft is arranged to extend from the torpedo section through the support structure inside the vessel.

The first propeller unit includes a first propeller hub, and the second propeller unit includes a second propeller hub. The first propeller hub, the second propeller hub and the torpedo section form a substantially streamlined body having increasing cross-sectional area in aft direction to improve the wake flow and the wake of the flow into the propellers. The first propeller unit and the second propeller unit are according to the invention arranged to rotate in contrary direction to each other.

According to another advantageous embodiment of the invention a CRP (counter rotating propeller) propulsion unit of a marine vessel is provided, which comprises a front propeller unit being assembled to a shaft extending through the hull of the vessel, and a rear propeller unit being assembled to a support structure behind the front propeller. In this embodiment at least one of the propeller units is provided with that at least one of the propeller units is provided with a pitch control arrangement. As the CRP propeller units being supported on the hull by, and the power trains being led through separate structures, the propeller pitch control may be relatively easily arranged using respective power trains to the propellers. This results in straightforward manner of providing a propulsion unit with counter rotating, controllable pitch propellers.
The invention provides several benefits over prior art. Firstly this solution avoids the problems associated with a propeller being turned for steering action inside the wake of the forward propeller, which is the case when using pod drive as rear propeller. Secondly, since the rudder unit is integrated with the rear propeller construction there is no need for separate, additional rudder. Additionally the present invention provides a solution, which is clearly more feasible than known CRP propellers. It also provides improved hydro dynamical efficiency of the whole assembly owing to the contra rotating propellers and the improved wake originating from the streamlined body of the propeller hubs and torpedo.

The invention will be described with the reference to the accompanying schematic drawings in which
- Figure 1 illustrates a preferred embodiment of the invention, and
- Figure 2 illustrates another preferred embodiment of the invention.

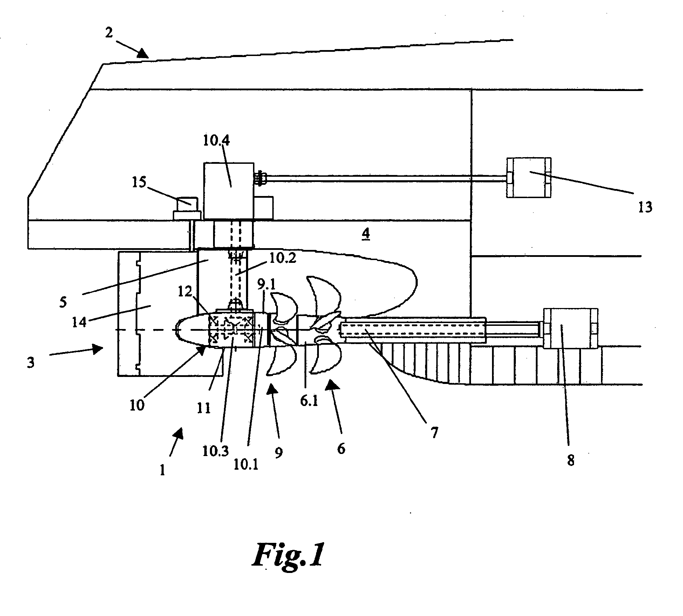

Figure 1 shows a stern section of a marine vessel 2. The vessel 2 includes a rudder device 3 supported behind a first propeller unit 6. The rudder device 3 is supported by a support structure 5 i.e. rudder horn, which is attached to a hull 4 of the vessel 2. The rudder device 3 include the support structure 5 rigidly attached to the hull 4 of the vessel 2 and a steering part 14, which is pivoted to the support structure 5 of the rudder device 3. For controlling the steering effect of the rudder device 3 it is provided with steering device 15, which may be controlled and operated in a manner known as such.

The first propeller unit 6 is connected to a first shaft arrangement 7 in conventional manner. The first shaft arrangement 7 includes a power unit 8, which drives the first propeller unit 6. The power unit 8 may be any suitable device for production power, such as, piston engine, gas turbine or electric motor. After the first propeller unit 6 there is a second propeller unit 9. The first and the second propeller unit are adapted as so called contra rotating propellers (CRP). This arrangement offers improved propulsion efficiency compared to conventional single screw arrangement. The propellers are positioned relatively near to each other so that there is only a small gap between the propellers. The second propeller unit 9 is assembled to a second shaft arrangement 10, which is connected to a power unit 13 respectively.

According to the invention the second shaft arrangement 10 is arranged in connection with the support structure 5 of the rudder device 3, so the shaft and power transmission for the second propeller unit 9 may be led inside the structure 5 and also supported by it. This way power train of both the propeller units may be engineered to be separate from each other hence avoiding the problems relating to e.g. co-axial shafts in conventional solutions.

The support structure 5 i.e. the rudder horn of the rudder device 3 is provided with a torpedo section 11 arranged behind the first and the second propeller units 6,9. Within the torpedo section 11 there is the shaft arrangement and support means 12 for the second propeller unit 9. The support means 12 comprise bearings and/or other power transmission and support devices. The second shaft arrangement 10 comprises a propeller shaft 10.1, which is parallel to the first shaft arrangement 7. In practise it is desirable to arrange the shaft 10.1 and the first shaft arrangement 7 aligned with each other. The second shaft arrangement 10 comprises also a drive shaft 10.2 which coupled to the propeller shaft 10.1 by an angle transmission or alike 10.3, which is also within the torpedo section 11. The drive shaft 10.2 extends from the torpedo section 11 through the support structure 5 of the rudder device 3 inside the vessel hull 4. There may further be an additional angle transmission/clutch 10.4 through which the drive shaft 10.2 is in connection with the power unit 13. It is also possible to connect shaft 10.2. directly to a power unit. Generally according to the invention it is possible to use readily available commercial z-drive units for providing power transmission between the second propeller unit 9 and its power unit 13.

The first propeller unit 6 includes a first propeller hub 6.1. Respectively the second propeller unit 9 includes a second propeller hub 9.1. According to a feature of the invention the first propeller hub 6.1, the second propeller hub 9.1 and the torpedo section 11 form a substantially streamlined body having increasing cross-sectional area in aft direction. This way the efficiency of the whole assembly, contra rotating propeller and integrated rudder device (CRP Rudder), may be maximised.

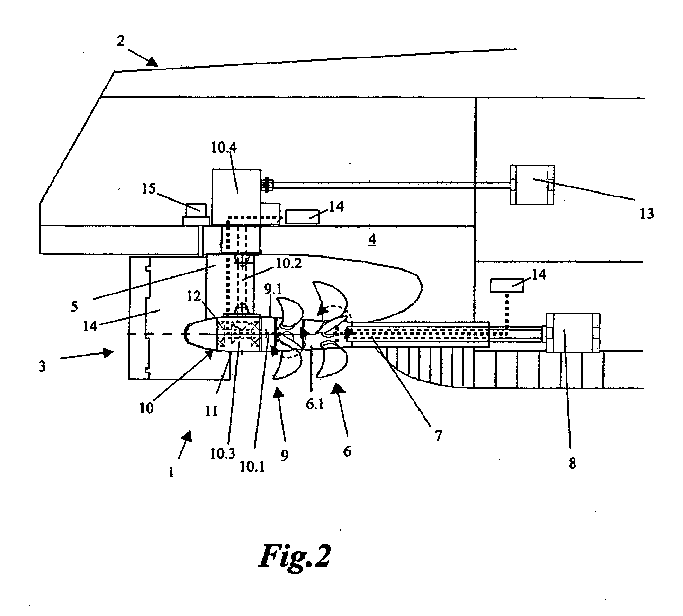

Now, turning to the Figure 2, in which corresponding reference numbers to those of Figure 1 are used, another embodiment of the invention will be described. In addition to showing a CRP propulsion unit 1 as shown in Figure 1, the embodiment is provided with propeller angle controlling facility 14. Thus it shows a propulsion unit 1 with counter rotating, controllable pitch (CP) propeller units 6,9. In the figure 2 there is shown that both of the propeller units 6,9 are provided with controllable pitch propeller but it is possible, depending on the power source, to use fixed pitch (FP) propellers for example in rear propeller unit 9. Using fixed pitch propeller in rear propeller unit would be beneficial particularly if the power source is an electric motor.

In practise the realising the pitch control is accomplished e.g. by hydraulically actuated control system being arranged in connection with a drive shaft of propulsion unit. The assembly comprising counter rotating propellers and having the pitch control facility in at least one of the propeller units provides better propulsion control and allows more unconfined selection of power unit for the system.

The invention is not limited to the embodiments shown but several modifications of the invention are reasonable within the scope of the attached claims. For example, the embodiment of the propulsion unit with counter rotating, controllable pitch propeller units may be considered to be adapted in a concept utilising a combination of a shaft driven front CP propeller and a podded rear FP propeller drive unit.

## Claims

1. Propulsion unit (1) of a marine vessel (2) including a rudder device (3) supported to a hull (4) of the marine vessel by a support structure (5), a first propeller unit (6) provided in front of the rudder device (3) and assembled to a first shaft arrangement (7), which is in connection with a power unit (8) arranged in the vessel, which first propeller unit (6) includes a first propeller hub (6.1), and a second propeller unit (9) arranged behind the first propeller unit (6) and assembled to a second shaft arrangement (10), which is arranged in connection with the support structure (5) of the rudder device (3), which second propeller unit (9) includes a second propeller hub (9.1), and which support structure (5) includes a torpedo section (11) arranged behind the first and the second propeller units (6,9), **characterised in that** the first propeller hub (6.1), the second propeller hub (9.1), and the torpedo section (11) form a streamlined body.

2. Propulsion unit according to claim 1, **characterised in that** the streamlined body formed by the first propeller hub (6.1), the second propeller hub (9.1) and the torpedo section (11) has an increasing cross-sectional area in aft direction.

3. Propulsion unit according to claim 1, **characterised in that** the torpedo section (11) has support means (12) for the second propeller unit (9).

4. Propulsion unit according to claim 1, **characterised in that** the second shaft arrangement comprises a propeller shaft (10.1) being substantially parallel to the first shaft arrangement (7) and a drive shaft (10.2) being at an angle to the propeller shaft.

5. Propulsion unit according to claim 4, **characterised in that** the propeller shaft (10.1) and the drive shaft (10.2) are connected with each other by an angle transmission (10.3) provided within the torpedo section (11).

6. Propulsion unit according to claim 5, **characterised in that** the drive shaft (10.2) is arranged to extend from the torpedo section (11) through the support structure (5) inside the marine vessel (2).

7. Propulsion unit according to claim 1, **characterised in that** the first propeller unit (6) and the second propeller unit (9) are arranged to rotate in contrary direction to each other.

8. Propulsion unit according to claim 1, **characterised in that** at least one of the propeller units (6,9) is provided with pitch control arrangement (14).

## Patentansprüche

1. Vortriebseinheit (1) für ein Schiff (2), umfassend eine Rudervorrichtung (3), die durch einen Halteaufbau (5) an einem Rumpf (4) des Schiffs gehalten wird, eine erste Schraubeneinheit (6), die vor der Rudervorrichtung (3) bereitgestellt ist und an einer ersten Wellenanordnung (7), die mit einer in dem Schiff eingerichteten Antriebseinheit (8) in Verbindung steht, montiert ist, wobei die erste Schraubeneinheit (6) eine erste Schraubennabe (6.1) umfasst, und eine zweite Schraubeneinheit (9), die hinter der ersten Schraubeneinheit (6) angeordnet ist und an einer zweiten Wellenanordnung (10), die in Verbindung mit dem Halteaufbau (5) der Rudervorrichtung (3) eingerichtet ist, montiert ist, wobei die zweite Schraubeneinheit (9) eine zweite Schraubennabe (9.1) umfasst, wobei der Halteaufbau (5) einen Torpedoabschnitt (11) umfasst, der hinter der ersten und der zweiten Schraubeneinheit (6, 9) angeordnet ist, **dadurch gekennzeichnet, dass** die erste Schraubennabe (6.1), die zweite Schraubennabe (9.1) und der Torpedoabschnitt (11) einen stromlinienförmigen Körper bilden.

2. Vortriebseinheit nach Anspruch 1, **dadurch gekennzeichnet, dass** der stromlinienförmige Körper, der durch die erste Schraubennabe (6.1), die zweite Schraubennabe (9.1) und den Torpedoabschnitt (11) gebildet ist, in der Richtung nach achtern eine zunehmende Querschnittfläche aufweist.

3. Vortriebseinheit nach Anspruch 1, **dadurch gekennzeichnet, dass** der Torpedoabschnitt (11) Haltemittel (12) für die zweite Schraubeneinheit (9) aufweist.

4. Vortriebseinheit nach Anspruch 1, **dadurch gekennzeichnet, dass** die zweite Wellenanordnung eine Schraubenwelle (10.1), die im Wesentlichen parallel zu der ersten Schraubenanordnung (7) verläuft, und eine Antriebswelle (10.2), die in einem Winkel zu der Schraubenwelle verläuft, umfasst.

5. Vortriebseinheit nach Anspruch 4, **dadurch gekennzeichnet, dass** die Schraubenwelle (10.1) und die Antriebswelle (10.2) durch ein Winkelgetriebe (10.3), das in dem Torpedoabschnitt (11) bereitgestellt ist, miteinander verbunden sind.

6. Vortriebseinheit nach Anspruch 5, **dadurch gekennzeichnet, dass** die Antriebswelle (10.2) so angeordnet ist, dass sie sich von dem Torpedoabschnitt (11) durch den Halteaufbau (5) in das Innere des Schiffs (2) erstreckt.

7. Vortriebseinheit nach Anspruch 1, **dadurch gekennzeichnet, dass** die erste Schraubeneinheit (6) und die zweiten Schraubeneinheit (9) so angeordnet sind, dass sie sich in zueinander entgegengesetzte Richtungen drehen.

8. Vortriebseinheit nach Anspruch 1, **dadurch gekennzeichnet, dass** zumindest eine der Schraubeneinheiten (6, 9) mit einer Neigungssteuerungsanordnung (14) versehen ist.

## Revendications

1. Unité de propulsion (1) d'un navire (2) comprenant un dispositif de gouvernail (3) supporté sur une coque (4) du navire par une structure de support (5), une première unité d'hélice (6) prévue devant le dispositif de gouvernail (3) et assemblée sur un premier agencement d'arbre (7) qui est en liaison avec une unité motrice (8) agencée dans le navire, laquelle première unité d'hélice (6) comprend un premier moyeu d'hélice (6.1), et une seconde unité d'hélice (9) agencée derrière la première unité d'hélice (6) et assemblée à un second agencement d'arbre (10) qui est agencé en connexion avec la structure de support (5) du dispositif de gouvernail (3), laquelle seconde unité d'hélice (9) comprend un second moyeu d'hélice (9.1) et laquelle structure de support (5) comprend une section de torpille (11) agencée derrière les première et seconde unités d'hélice (6, 9), **caractérisée en ce que** le premier moyeu d'hélice (6.1), le second moyeu d'hélice (9.1) et la section de torpille (11) forment un corps aérodynamique.

2. Unité de propulsion selon la revendication 1, **caractérisée en ce que** le corps aérodynamique formé par le premier moyeu d'hélice (6.1), le second moyeu d'hélice (9.1) et la section de torpille (11) présente une aire transversale croissante dans la direction arrière.

3. Unité de propulsion selon la revendication 1, **caractérisée en ce que** la section de torpille (11) présente des moyens de support (12) pour la seconde unité d'hélice (9).

4. Unité de propulsion selon la revendication 1, **caractérisée en ce que** le second agencement d'arbre comprend un arbre d'hélice (10.1) essentiellement parallèle au premier agencement d'arbre (7) et un arbre d'entraînement (10.2) en angle avec l'arbre d'hélice.

5. Unité de propulsion selon la revendication 4, **caractérisée en ce que** l'arbre d'hélice (10.1) et l'arbre d'entraînement (10.2) sont reliés l'un à l'autre par un renvoi d'angle (10.3) prévu à l'intérieur de la section de torpille (11).

6. Unité de propulsion selon la revendication 5, **caractérisée en ce que** l'arbre d'entraînement (10.2) est agencé pour s'étendre depuis la section de torpille (11) à travers la structure de support (5) à l'intérieur du navire (2).

7. Unité de propulsion selon la revendication 1, **caractérisée en ce que** la première unité d'hélice (6) et la seconde unité d'hélice (9) sont agencées pour tourner dans une direction contraire l'une à l'autre.

8. Unité de propulsion selon la revendication 1, **caractérisée en ce qu'**au moins une des unités d'hélice (6, 9) est dotée d'un agencement de commande de tangage (14).
